# EUROPEAN PATENT SPECIFICATION

(11) **EP 2 639 872 B1**
(45) Date of publication and mention of the grant of the patent: **29.04.2015**
(21) Application number: 13158558.0
(22) Date of filing: 11.03.2013
(51) Int. Cl.: H01M 8/06, H01M 8/04

(54) **Fuel cell system**
Brennstoffzellensystem
Système de pile à combustible

(30) Priority: 12.03.2012 JP 2012055035
(43) Date of publication of application: 18.09.2013
(73) Proprietor: AISIN SEIKI KABUSHIKI KAISHA, Kariya-shi, Aichi 448-8650 (JP); KYOCERA CORPORATION, Kyoto-shi, Kyoto 612-8501 (JP)
(72) Inventor: Ohkawara, Hiroki, Kariya-shi, Aichi 448-8650 (JP); Shinpei Shiraishi, Kyoto 612-8501 (JP)
(74) Representative: TBK

(56) References cited:
- JP-A- H1 116 582
- JP-A- 2008 159 462
- JP-A- 2008 159 466

## Description

### TECHNICAL FIELD

This disclosure relates to a fuel cell system that supplies reforming water in a water tank to an evaporation unit via a water supply passage to generate water vapor, and reforms a source gas with the water vapor to generate an anode gas.

### BACKGROUND DISCUSSION

In this kind of fuel cell system, there has been a demand to accurately supply the reforming water to the evaporation unit to accurately obtain a target quantity of the water vapor. For this reason, various techniques have been disclosed.

JP 2004-288505A (Reference 1) discloses a reforming apparatus for a fuel cell that has a water tank configured to collect the reforming water, and a water pump adapted to supply the reforming water in the water tank to the evaporation unit. According to this configuration, by detecting an amount of change in water level in the water tank configured to collect the reforming water and performing feed-back control on the amount of change in water level for the water pump, a flow rate of the reforming water stored in the water tank is adjusted. Thereby, the flow rate of the reforming water supplied to the reforming unit is adjusted to a desired quantity of water.

JP 2005-276544A (Reference 2) discloses a fuel cell system that has a water tank configured to collect the reforming water, and a water pump configured to supply the reforming water in the water tank to the evaporation unit. According to this configuration, a pressure sensor is provided within the water tank, an amount of a change of the water in the water tank is monitored by the pressure sensor, and driving of the water pump is subjected to feed-back control by the signal of the pressure sensor.

JP 2008-273822A (Reference 3) discloses a fuel cell system that has a water tank configured to collect the reforming water, and a water pump configured to supply the reforming water in the water tank to the evaporation unit. According to this configuration, when the water pump is started, the water discharged from the pump is returned to the water tank by the system circuit switching, and then the circuit is switched so as to send the water to a reformer, whereby the air contained in water during pump startup is prevented from flowing into the reformer.

According to the techniques related to the above-mentioned References 1 to 3, it is not necessarily enough to accurately supply the reforming water to the evaporation unit thereby accurately obtaining the target quantity of the water vapor.

According to the techniques related to the above-mentioned References 1 and 2, although the reforming water flow rate is adjusted by detecting the amount of change in water level of the reforming water tank, in a water independent type system that recovers and returns the water vapor or the like in the combustion exhaust to the reforming water tank, when the water is independent, there is no change of the water level of the reforming water tank, and when excess water is recovered, the water level of the reforming water tank rises, and thus it is difficult to control the flow rate of the reforming water supplied to the evaporation unit.

An object of the technique related to the above-mentioned Reference 3 is to prevent the air generated at the time of the water pump startup from flowing into the reformer, but not to correct the supply abnormality of the reforming water and the water pump at the time of the degradation of the pump. Conversely, it is impossible to detect/control the above-mentioned defect, and a defect occurs due to increases in cost and build size by attaching an extra water tank.

As mentioned above, according to the techniques related to References 1 to 3, it is not necessarily enough to accurately supply the reforming water to the evaporation unit and accurately obtain the target quantity of the water vapor.

A need thus exists for a fuel cell system that is advantageous to accurately supplying the reforming water to the evaporation unit and accurately obtaining the target quantity of the water vapor in the evaporation unit.

### SUMMARY

(1) According to a first aspect of this disclosure, there is provided a fuel cell system that includes a fuel cell that is supplied with an anode gas and a cathode gas to perform power generation; an evaporation unit that evaporates a reforming water to generate water vapor; a reforming unit that reforms a source gas using the water vapor generated in the evaporation unit to form anode gas; a water tank that collects the reforming water before being supplied to the evaporation unit; a water supply passage through which the water tank and the evaporation unit communicate with each other to supply the reforming water in the water tank to the evaporation unit; a water conveyance source that is placed in the water supply passage or the water tank and is able to switch between a positive rotatable state of supplying the reforming water in the water tank to the evaporation unit and a reverse rotatable state of returning the reforming water of the water supply passage to the water tank; a water sensor that is provided upstream of the evaporation unit and downstream of the water conveyance source in the water supply passage to detect the existence of the water; and a control unit to which a detection signal of the water sensor is input to control the water conveyance source, wherein the control unit executes water supply abnormality determination processing of the water supply to the water sensor side in any one of before starting a power generation operation of the fuel cell, after finishing the power generation operation of the fuel cell, and during stoppage of the power generation operation, and the water supply abnormality determination processing includes (i) a returning operation that returns the reforming water of the water supply passage to the water tank by reversely rotating the water conveyance source to empty the reforming water of the water supply passage, (ii) a water supply operation that supplies the reforming water of the water tank to the water supply passage by positively rotating the water conveyance source in a state of emptying the reforming water of the water supply passage, and obtains a physical quantity concerning the output of the water conveyance source that is required until the water sensor detects the water, and (iii) a determination operation that determines whether or not the physical quantity in the water supply operation is within a prescribed range, determines that the water supply to the evaporation unit is normal when the physical quantity is within the prescribed range, and determines that the water supply to the evaporation unit is abnormal when the physical quantity in the water supply operation is out of the prescribed range.

In this manner, the control unit executes the water supply abnormality determination processing in any one of before starting a power generation operation of the fuel cell, after finishing the power generation operation of the fuel cell, and during stop of the power generation operation of the fuel cell, and determines presence or absence of the abnormality of the water supply to the water sensor side (the evaporation unit). Abnormality of the water supply means that the reforming water of the water tank cannot be supplied to the sensor side (the evaporation unit side) by the water conveyance source according to a target, and includes the oversupply of the reforming water and the supply shortage of the reforming water. As abnormality of the water supply, for example, the breakdown of the water sensor, the breakdown of the water conveyance source, flow path closedown of the water supply passage, a water leak from the water supply passage, freezing of the water supply passage or the like are considered as factors. The abnormality of the water supply generates inadequacy in an S/C value when reforming the source gas.

When the water supply abnormality determination processing is performed before starting the power generation operation of the fuel cell or during stop of the power generation operation, the power generation operation of the fuel cell system at the abnormal S/C value is prevented in advance, and thus the defect of the breakdown of the reforming unit, the fuel cell or the like is avoided. Furthermore, when the water supply abnormality determination processing is performed after finishing the power generation operation of the fuel cell, since the time until the next power generation operation is secured it is possible to gain the time in which there is capability for repairing or exchanging the breakdown of the water sensor, the water conveyance source and the water supply passage.

As the above-mentioned physical quantity, a physical quantity concerning an elapsed time from the starting time of the water supply operation to the time when detecting the water by the water sensor, or a physical quantity concerning an electricity supply quantity to the water conveyance source from the starting time of the water supply operation to the time when detecting the water by the water sensor may be adopted as an example. Specifically, the elapsed time from the starting time of the water supply operation to the time when detecting the water by the water sensor is adopted as an example. Alternatively, when the motor driving the water conveyance source is a step motor, a total number of pulses, which is input to the water conveyance source from the starting time of the water supply operation to the time when detecting the water by the water sensor, may be adopted as an example.

According to the present aspect, in any one of before starting the power generation operation of the fuel cell (including just before starting the power generation operation), after finishing the power generation operation of the fuel cell (including just after finishing the power generation operation), and during stop of the power generation operation of the fuel cell, the control unit executes the water supply abnormality determination processing. In this manner, the water supply abnormality determination processing is performed at a time other than when the power generation operation of the fuel cell is executed. The reason is because, when the fuel cell performs the power generation operation, the reforming water needs to be supplied to the evaporation unit, and it is not preferable to empty the reforming water existing in the water supply passage. The time just before starting the power generation operation refers to a time after the startup instruction is input to the system by a user or a control unit and before the power generation operation starts. The time just after starting the power generation operation refers a time within a prescribed time (for example, within a time until the temperature of the reforming unit or the fuel cell drops to 50°C or less after the power generation is finished) after the finishing instruction is input to the system by a user or the control unit and the power generation is stopped.

In the water supply abnormality determination processing, first, the control unit executes the returning operation that returns the reforming water of the water supply passage to the water tank by reversely rotating the water conveyance source and empties the reforming water of the water supply passage. In this manner, the reforming water of the water supply passage is emptied. After that, the water supply operation is executed of positively rotating the water conveyance source, thereby to supply the reforming water of the water tank to the water supply passage. In the water supply operation, the water sensor detects the physical quantity concerning the output of the water conveyance source until the time when detecting the water. The prescribed range concerning the physical quantity is preset.

The control unit determines whether or not the physical quantity in the water supply operation is within the prescribed range, in the determination operation. The control unit determines that the water supply to the evaporation unit is normal when the physical quantity is within the prescribed range, and determines that the water supply to the evaporation unit is abnormal when the physical quantity in the water supply operation is out of the prescribed range. For this reason, it is advantageous to accurately supplying the reforming water to the evaporation unit and accurately obtaining the target quantity of the water vapor. When the control unit determines that the water supply to the evaporation unit is abnormal, it is preferable that the control unit output an alarm signal. As the alarm, the system stoppage or the operation of an alarm unit is exemplified.

(2) According to the fuel cell system related to a second aspect of this disclosure, in the first aspect in the water supply operation, the physical quantity concerning the output of the water conveyance source required before detecting the water using the water sensor may be an elapsed time from the starting time of the water supply operation to the time when the water sensor detects the water. In the determination operation, it may be determined whether or not the elapsed time in the water supply operation is within the prescribed range. When the time is within the prescribed range, the control unit may determine that the water supply to the evaporation unit is normal, and when the time in the water supply operation is out of the prescribed range, the control unit may determine that the water supply to the evaporation unit is abnormal. For this reason, it is advantageous to accurately supplying the reforming water to the evaporation unit and accurately obtaining the target quantity of the water vapor.

(3) According to the fuel cell system related to a third aspect of this disclosure, in the above-mentioned aspects of this disclosure, the water conveyance source may include a pump and a step motor adapted to rotate the pump, and, in the water supply operation, the physical quantity concerning the output of the water conveyance source required before detecting the water using the water sensor may be a total number of pulses that is input to the step motor from the starting time of the water supply operation to the time when the water sensor detects the water. The control unit may determine whether or not the time in the water supply operation is within the prescribed time, in the determination operation. The control unit may determine that the water supply to the evaporation unit is normal when the total number of pulses in the water supply operation is within the prescribed range, and the control unit may determine that the water supply to the evaporation unit is abnormal when the total number of pulses in the water supply operation is out of the prescribed range. For this reason, it is advantageous to accurately supplying the reforming water to the evaporation unit and accurately obtaining the target quantity of the water vapor.

(4) According to the fuel cell system related to a fourth aspect of this disclosure, in the above-mentioned aspects of this disclosure, the control unit may correct characteristics that indicate a correlation between the physical quantity concerning the output of the water conveyance source and the reforming water flow rate supplied to the water supply passage, when the physical quantity is out of the prescribed range or when the water supply abnormality determination processing is finished.

According to this aspect, the characteristics (a map or the like) indicating the correlation between the physical quantity concerning the output of the water conveyance source and the reforming water flow rate supplied to the water supply passage are corrected. The correction is equivalent to revision. For this reason, in the power generation operation after the correction, the control unit controls the water conveyance source based on the characteristics (the map or the like) after the correction. For this reason, it is advantageous to accurately supplying the reforming water to the evaporation unit and accurately obtaining the target quantity of the water vapor. The correction is preferably performed when the physical quantity is out of the prescribed range. Alternatively, even when the physical quantity is within the prescribed range, the correction can also be performed when the water supply abnormality determination processing is finished. In this case, it is possible to rapidly cope with the temporal change in the characteristics of the water conveyance source such as a pump.

(5) According to the fuel cell system related to a fifth aspect of this disclosure, in the above-mentioned aspects of this disclosure, a threshold physical quantity greater than an upper limit of the prescribed range may be set, and in a case where the water sensor does not detect the water in the condition that the water supply operation is executed, when the physical quantity measured from the starting time of the water supply operation becomes greater than the threshold physical quantity, the control unit may stop the positive rotation of the water conveyance source performing the water supply operation, determine that the water supply is abnormal, and suppress the oversupply of the reforming water to the evaporation unit. Although the water conveyance source is driven and the water supply operation is continuously executed over a long period of time, in the condition that the water sensor does not detect the water, the breakdown of at least one of the water sensor, the water conveyance source and the water supply passage is expected.

Thus, when the above-mentioned conditions are satisfied, that is, the physical quantity measured from the starting time of the water supply operation becomes greater than the threshold physical quantity, the control unit stops the positive rotation of the water conveyance source, that is, forcibly stops the water supply operation, and determines that the water supply to the evaporation unit is abnormal. Thereby, the control unit suppresses the oversupply of the reforming water to the evaporation unit, even when the water sensor breaks down. For this reason, it is advantageous to accurately supplying the reforming water to the evaporation unit and accurately obtaining the target quantity of the water vapor, and it is possible to suppress the reforming catalyst being flooded and being degraded due to the oversupply of the reforming water.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a conceptual view of a fuel cell system;
Fig. 2 is a conceptual view of a control unit;
Fig. 3 is a graph that illustrates a relationship between an elapsed time from a starting time of a water supply operation to a time when a water sensor detects the water and a reforming water flow rate per unit time supplied to a water supply passage by a water pump;
Fig. 4 is a flow chart that illustrates an example of a control rule executed by the control unit;
Fig. 5 is a graph that illustrates a relationship between a DUTY value of the water pump and the reforming water flow rate per unit time supplied to the water supply passage by the water pump;
Fig. 6 is a graph that illustrates a relationship between the DUTY value of the water pump and the reforming water flow rate per unit time supplied to the water supply passage by the water pump, in regard to before the correction and after the correction;
Fig. 7 is a graph that illustrates a relationship between the DUTY value of the water pump and the reforming water flow rate per unit time supplied to the water supply passage by the water pump, in regard to before the correction and after the correction; and
Fig. 8 is a flow chart that illustrates an example of a control rule executed by the control unit.

### DETAILED DESCRIPTION

The following aspects (1) and (2) can be adopted as necessary. These aspects may be adopted for the following embodiments as necessary.
(1) When assuming a driving amount of a water conveyance source per unit time when supplying the water toward a water sensor in the water supply operation of the water supply abnormality determination processing as Nra, and when assuming a driving amount of the water conveyance source per unit time when supplying the water toward the evaporation unit in the power generation operation of the fuel cell as Nsa, any one of a relationship of Nra = Nsa, a relationship of Nra > Nsa and a relationship of Nra < Nsa is set. As the water conveyance source, a water pump is adopted. As the driving amount, a number of revolutions per unit time is described as an example.
   If Nra > Nsa, the water supply operation of the water supply abnormality determination processing can be shortened, and thus the time required for the water supply abnormality determination processing can be shortened as much as possible. Furthermore, when Nra < Nsa, the driving amount of the water conveyance source per unit time can be slowed down in the water supply operation of the water supply abnormality determination processing, a water level of the water supply passage can be gradually raised, it is advantageous to suppressing the entrainment of the air to the water supply passage, and the determination accuracy in the determination operation can be improved.
(2) When assuming a driving amount of the water conveyance source per unit time when draining the water to the water tank from the water supply passage in a returning operation as Nrc, and when assuming a driving amount of the water conveyance source per unit time when supplying the water toward the water sensor in the water supply operation as Nsc, any one of a relationship of Nrc = Nsc, a relationship of Nrc > Nsc and a relationship of Nrc < Nsc is set. As the water conveyance source, the water pump is adopted. As the driving amount, the number of revolutions per unit time is described as an example.

If Nrc < Nsc, the water supply time can be shortened. If Nrc > Nsc, the driving amount of the water conveyance source per unit time can be slowed down in the water supply operation rather than the returning operation. For this reason, in the water supply operation to the water tank, the water level of the water supply passage can be slowly lowered, it is advantageous to suppressing the entrainment of the air to the water supply passage, and the determination accuracy in the determination operation can be improved.

Hereinafter, each embodiment disclosed here will be described.

### [Embodiment 1]

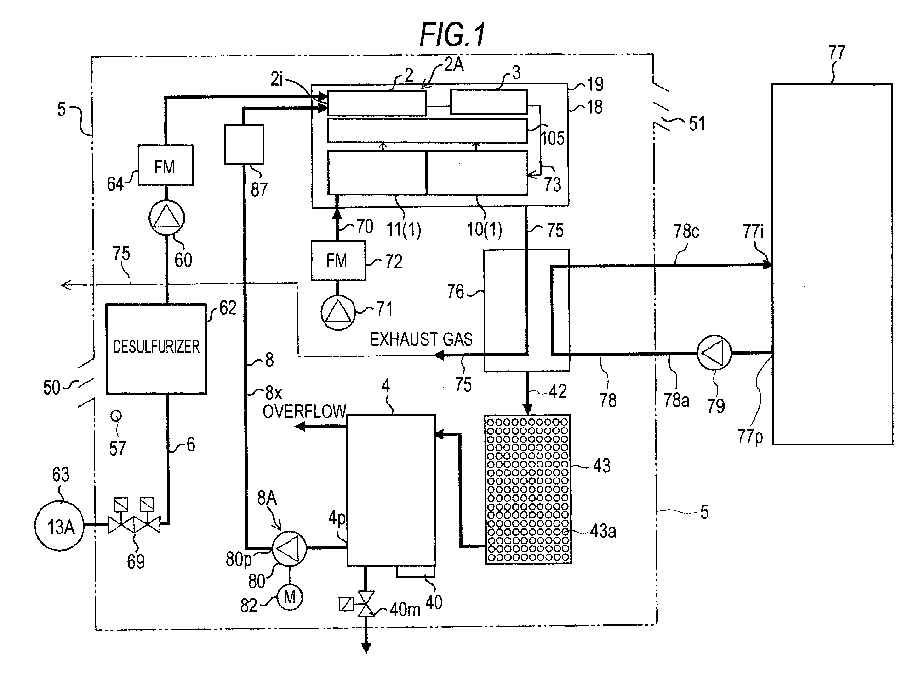

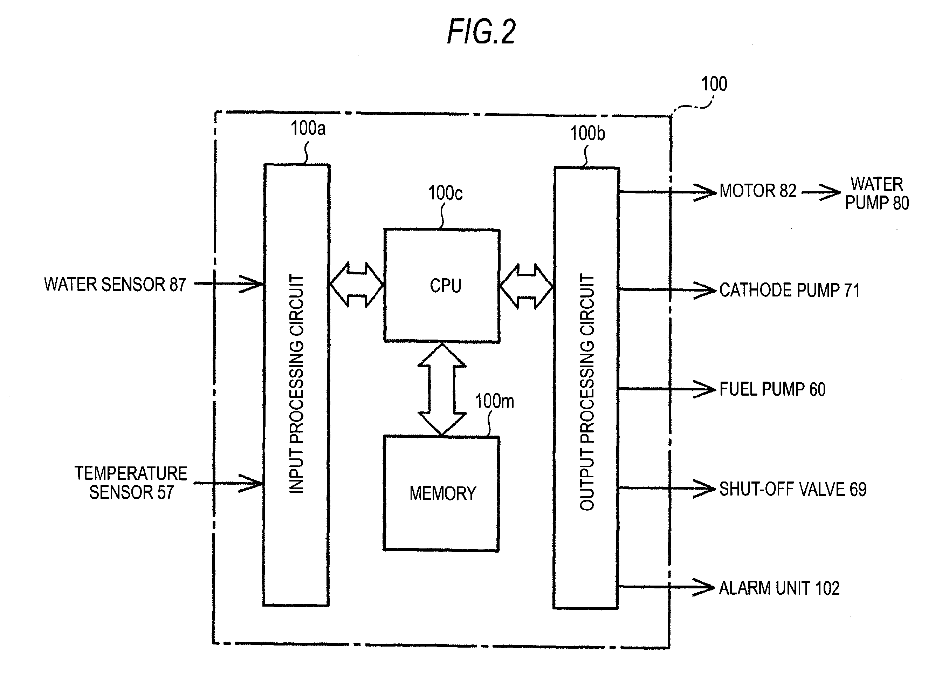

Figs. 1 and 2 illustrate a concept of Embodiment 1. As illustrated in Fig. 1, a fuel cell system has a fuel cell 1, an evaporation unit 2 that evaporates liquefied water to generate the water vapor, a reforming unit 3 that reforms a source gas using the water vapor generated by the evaporation unit 2 to form an anode gas, a water tank 4 that collects the liquefied water supplied to the evaporation unit 2, and a case 5 that accommodates these components. The fuel cell 1 has an anode 10 and a cathode 11 with an ion conductor interposed therebetween, and can be applied to, for example, a solid oxide fuel cell 1 (an operating temperature: for example, 400°C or more) also called an SOFC.

The reforming unit 3 is formed by supporting a reforming catalyst in a carrier such as ceramics, and is provided adjacent to the evaporation unit 2. The reforming unit 3 and the evaporation unit 2 constitute a reformer 2A, and are surrounded by an thermal insulation wall 19 together with the fuel cell 1 to form a power generation module 18. At the time of the power generation operation, the reformer 2A is heated within the thermal insulation wall 19 so as to be suitable for the reforming reaction. At the time of the power generation operation, the evaporation unit 2 heats the water and is heated so that the water can become the water vapor. A combustion unit 105 heats the reforming unit 3 and the evaporation unit 2. A fuel passage 6 supplies the fuel from a fuel source 63 to the reformer 2A, and has a shut-off valve 69, a desulfurizer 62, a fuel pump 60 and a flowmeter 64. The arrangement sequence is not particularly limited. A cathode gas passage 70 for supplying the cathode 11 with the cathode gas (air) is connected to the cathode 11 of the fuel cell 1. In the cathode gas passage 70, a cathode pump 71 and a flowmeter 72 functioning as a gas returning source for returning the cathode gas are provided.

As illustrated in Fig. 1, the case 5 has a suction port 50 communicating with outside air, a discharge port 51, and a temperature sensor 57 that detects the temperature near the suction port 50 (the outside air). The temperature sensor 57 may be provided as needed. The water tank 4 adapted to collect the liquefied water reformed by the reforming unit 3 is accommodated in the case 5. The water tank 4 is further provided with a water drain valve 40m, and a heating unit 40 having a heating function of an electric heater or the like is provided as needed. The heating unit 40 heats the water stored in the water tank 4, and can be formed by the electric heater or the like. When an environmental temperature such as an outside air temperature is low, the water of the water tank 4 is heated by the heating unit 40 based on the instruction from a control unit 100, and thus freezing is suppressed.

As illustrated in Fig. 1, a water supply passage 8, through which an outlet port 4p of the water tank 4 and an inlet port 2i of the evaporation unit 2 communicate with each other, is provided as piping within the case 5. As illustrated in Fig. 1, since the water tank 4 is placed below the evaporation unit 2 in the case 5, the water supply passage 8 extends along the vertical direction. The water supply passage 8 is a passage that supplies the water stored in the water tank 4 to the evaporation unit 2 from the outlet port 4p of the water tank 4 toward the inlet port 2i of the evaporation unit 2. The water supply passage 8 is provided with a water returning source 8A that returns the water in the water tank 4 up to the evaporation unit 2. The water returning source 8A has a pump 80, and an electric motor 82 that drives the pump 80. As the pump 80, a known pump such as a gear pump having favorable sealing properties can be adopted. In addition, when the operation of the fuel cell system is stopped, in many cases, the water exists in a passage portion 8x downstream rather than an outlet port 80p of the pump 80 in the water supply passage 8. In addition, the water supply passage 8 communicates with the atmospheric air via the evaporation unit 2, the reforming unit 3, the fuel cell 1 or the like. The water pump 80 may be provided on the outlet port 4p side of the water tank 4.

In the water supply passage 8, a water sensor 87 is provided downstream of the pump 80 and upstream of the evaporation unit 2. The water sensor 87 is preferably placed just before the inlet port 2i of the evaporation unit 2 in the water supply passage 8. When a distance from the outlet port 4p of the water tank 4 to the inlet port 2i of the evaporation unit 2 in the water supply passage 8 is relatively displayed as 100, it is preferable that the water sensor 87 be provided within the range of 70 to 99, particularly within the range of 80 to 90 from the outlet port 4p of the water tank 4.

The detection principle of the water sensor 87 may be any, and may be any one of a method of detecting a change of capacitance based on the presence or absence of the water, a method of detecting a change of a conduction quantity based on the presence or absence of the water, a method of detecting a change of an electric resistance based on the presence or absence of the water, a method of detecting a change of a water pressure based on the presence or absence of the water, and a method of detecting magnetic change based on the presence or absence of the water, and other methods may be used. As illustrated in Fig. 1, in the water supply passage 8, the water tank 4, the water pump 80, the water sensor 87, and the evaporation unit 2 are placed in this order and in series.

In addition, in the water supply passage 8, a flowmeter adapted to measure the flow rate of the reforming water is not provided. The reason thereof is because the flow rate of the reforming water per unit time supplied to the water supply passage 8 is small, and the detection accuracy of the flowmeter is not sufficient. Furthermore, the reason is because the presence or absence of normality of the water pump 80 and the water sensor 87 is secured by the water supply abnormality determination processing, and the reforming water flow rate flowing through the water supply passage 8 can be obtained based on the calculation. However, in some cases, for the checking of a calculation result or the like, a flowmeter may be provided in the water supply passage 8.

According to the present embodiment, the motor 82 adapted to drive the water pump 80 can perform the positive rotation and the reverse rotation. That is, the motor 82 can be switched between a positive mode that rotates and drives in the positive direction to convey the water in the water tank 4 from the outlet port 4p toward the inlet port 2i of the evaporation unit 2, and a reverse mode that rotates and drives in the reverse direction to return the water of the water supply passage 8 from the outlet port 4p into the water tank 4. Thus, the water pump 80 having the motor 82 can be switched between the positive mode that conveys the water in the water tank 4 to the evaporation unit 2 and the reverse mode that reverses the water in the water supply passage 8 into the water tank 4. As illustrated in Fig. 2, the control unit 100 for controlling the motor 82 via a drive circuit is provided. The control unit 100 has an input processing circuit 100a, an output processing circuit 100b, a CPU 100c having a timer measurement function, and a memory 100m. As the motor 82, although any motor capable of performing the positive rotation and the reverse rotation may be used, a DC motor and a step motor are described as an example. The control unit 100 controls the water pump 80 via the motor 82. Furthermore, the control unit 100 is able to control the cathode pump 71, the fuel pump 60, a shut-off valve 69, and an alarm unit 102 (see Fig. 2).

### (Power Generation Operating)

When starting the system, the control unit 100 executes a warm-up mode before the power generation mode. In the warm-up mode, the control unit 100 drives the fuel pump 60 in the state of opening the shut-off valve 69, and supplies the source gas to the combustion unit 105 through the fuel passage 6 via the fuel cell 1 of the power generation module 18. The control unit 100 also drives the cathode pump 71, and supplies the air to the combustion unit 105 through the cathode 11 of the power generation module 18 via the cathode gas passage 70. The source gas is combusted by the air in the combustion unit 105. The reforming unit 3, the evaporation unit 2 and the fuel cell 1 are heated by the combustion heat in the combustion unit 105. When the reforming unit 3 and the evaporation unit 2 become a predetermined temperature or more, the water pump 80 is driven, the reforming process is performed by the reforming unit 3, the reformed gas is combusted by the combustion unit 105, and the reforming unit 3, the evaporation unit 2 and the fuel call 1 are continuously heated by the combustion heat. When the reforming unit 3, the evaporation unit 2 and the fuel cell 1 are heated to a predetermined temperature range, the control unit 100 finishes the warm-up mode, and shifts the mode to the power generation mode.

When the control unit 100 performs the positive rotation of the motor 82 and drives the water pump 80 in the positive mode, the liquefied reforming water in the water tank 4 is conveyed through the water supply passage 8 from the outlet port 4p of the water tank 4, and is supplied to the evaporation unit 2 from the inlet port 2i. The reforming water is heated by the evaporation unit 2 and becomes the water vapor. The water vapor moves to the reforming unit 3 together with the fuel (preferably, the gaseous phase, but in some cases, a liquefied phase may be used) that is supplied from the fuel passage 6. In the reforming unit 3, the source gas is reformed by the water vapor and becomes the anode gas (hydrogen-containing gas) (an endothermic reaction). The anode gas is supplied to the anode 10 of the fuel cell 1 via an anode gas passage 73. Furthermore, the cathode pump 71 is driven, and the cathode gas (oxygen-containing gas, air in the case 5) is supplied to the cathode 11 of the fuel cell 1 via the cathode gas passage 70. Thereby, the fuel cell 1 generates electricity.

In the warm-up mode and the power generation mode, the high-temperature exhaust gas generated by the power generation module 18 is exhausted to the outside of the case 5 via an exhaust gas passage 75. In the exhaust gas passage 75, a heat exchanger 76 having a condensation function is provided. A hot water storage passage 78 and a hot water storage pump 79 connected to a hot water storage tank 77 are provided. The hot water storage passage 78 has an outward path 78a and an inward path 78c. The low-temperature water of the hot water storage tank 77 is discharged from an outlet port 77p of the hot water storage tank 77 by driving of the hot water storage pump 79, passes through the outward path 78a, reaches the heat exchanger 76, and is heated by the exhaust gas in the heat exchanger 76. The water heated by the heat exchanger 76 returns to the hot water storage tank 77 from a return port 77i via the inward path 78c. In this manner, the water of the hot water storage tank 77 becomes the hot water. The water vapor contained in the above-mentioned exhaust gas is condensed by the heat exchanger 76 and becomes the condensed water. The condensed water flows down through a water purification unit 43 by gravity or the like via a condensed water passage 42 extended from the heat exchanger 76. Thus, the water purification unit 43 and the water tank 4 are located below the power generation module 18.

Since the water purification unit 43 has a water purifier 43a such as an ion exchange resin, impurities of the condensed water are removed. The water from which the impurities are removed moves to the water tank 4, and is stored in the water tank 4 as the reforming water. When the pump 80 is driven in the positive mode, the reforming water in the water tank 4 is supplied to the high-temperature evaporation unit 2 via the water supply passage 8, becomes the water vapor by the evaporation unit 2, is supplied to the reforming unit 3, and is consumed as the reforming reaction that reforms the fuel in the reforming unit 3.

### (Execution Time of Water Supply Abnormality Determination Processing)

In the above-mentioned water supply abnormality determination processing, the control unit 100 instructs the DUTY value or the revolution frequency to the drive circuit of the motor 82 of the water pump 80, controls the motor 82 based on the DUTY value or the revolution number, and controls the rotation of the water pump 80.

The power generation operation is formed by the warm-up mode that heats the evaporation unit 2, the reforming unit 3 and the fuel cell 1 before the power generation, and the power generation mode that generates electricity by the warmed fuel cell 1. The control unit 100 preferably executes the water supply abnormality determination processing as needed, when there is no instruction of the reforming water flow rate.

In other words, based on the system startup instruction from a user or the control unit 100, the control unit 100 executes the water supply abnormality determination control before executing the warm-up mode, that is, before starting the system. Otherwise, in a standby mode in which the fuel cell 1 does not generate electricity, or in the stop mode, the control unit 100 may execute the water supply abnormality determination control. Furthermore, since abnormality concerning the reforming water occurs, the control unit 100 may perform the water supply abnormality determination control after emergency stopping of the system. In this manner, the control unit 100 may perform the water supply abnormality determination processing each time before starting the warm-up mode, the standby mode and the stop mode.

In this manner, according to the present embodiment, in any one of before starting the power generation operation of the fuel cell 1, after finishing the power generation operation of the fuel cell 1 and during stop of the power generation operation of the fuel cell 1, the control unit 100 is able to execute the water supply abnormality determination control. Particularly, if there is no difficulty, whenever starting the power generation operation of the fuel cell 1, whenever stopping the power generation operation of the fuel cell 1 and whenever there is stoppage of the power generation operation of the fuel cell 1, the control unit 100 preferably executes the water supply abnormality determination control. In this case, it is possible to discover the defects such as the breakdown of the water pump 87, the breakdown of the water pump 80, a water leak from the water supply passage 8, and flow path closedown of the water supply passage 8 as soon as possible.

The standby mode refers to a mode that is not operated other than the warm-up mode, the power generation mode and the stop mode. That is, the stop mode refers to a mode after a stop instruction is input from a user or a control board, only the cathode air is circulated, the fuel cell, the reforming unit or the like is cooled, and the control unit 100 is shifted to the standby mode.

### (Content of Water Supply Abnormality Determination Control)

The control unit 100 executes (i) to (iii) in the water supply abnormality determination processing.

### (i) Returning operation

First, the control unit 100 reversely rotates the water pump 80, and executes the returning operation that returns the reforming water, which exists from the outlet port 80p of the water pump 80 in the water supply passage 8 to the inlet port 2i of the evaporation unit 2 of the power generation module 18, to the water tank 4. Thereby, the reforming water in the water supply passage 8 is emptied. In addition, the reforming water in the water supply passage 8 may be emptied by the reverse rotation of the water pump 80 as well as its own weight.

### (ii) Water Supply Operation

By positively rotating the motor 82 of the water pump 80 by a predetermined DUTY value or a revolution number, the water supply operation is executed which supplies the reforming water in the water tank 4 to the water supply passage 8. At this time, the control unit 100 having the timer function detects an elapsed time T from the starting time of the water supply operation to the time when the water sensor 87 detects the water (turned ON). In this case, the water of the water tank 4 can be supplied to the water supply passage 8, while opposing gravity.

### (iii) Determination Operation

If the elapsed time T (the physical quantity) until the detection is out of a prescribed range concerning the time, the control unit 100 determines that the water supply to the evaporation unit 2 is abnormal (the breakdown of at least one of the water sensor 78, the water pump 80 and the water supply passage 8), and raises an abnormal flag. If the elapsed time T is within the prescribed range, the control unit 100 determines that the water supply to the evaporation unit 2 is normal, that is, determines that the water sensor 87, the water pump 80 and the water supply passage 8 are normal, raises a normal flag, and finishes the water supply abnormality determination control.

In the normal case, the control unit 100 is shifted to the warm-up mode, and the power generation mode. Herein, the upper limit value and the lower limit value concerning the elapsed time T are preferably determined based on the S/C value defined by the breakdown of the power generation module 18, the degradation of the power generation module 18 or the like. The S/C value means a rate of a mole ratio between the water vapor (steam) and carbon (C) in the source gas (carbon) serving as the source gas containing the carbon component in the water vapor reformation. The water vapor reforming is expressed by a general formula (1).

(1) CₙHₘ + nH₂O → nCO + [(m/2) + n]H₂

in a case of n = 1, m = 4, methane is reformed by the water vapor. S/C = 2 is a state where H₂O is input at 2n moles with respect to 1 mole of CₙHₘ. When considering protective properties of the power generation module 18, generally, S/C value = 2.5 or as the range of the S/C values, 2.0 to 3.0 is a preferable range.

Even when the water sensor 87 breaks down or the water pump 80 breaks down, in order to prevent the reforming water from being excessively poured into the evaporation unit 2 of the power generation module 18, the lower limit value of the prescribed range is set. If the reforming water is excessively supplied to the evaporation unit 2, there is a concern that the defects such as the excessive increase of the amount of the water vapor, the excessive drop of the temperature of the reforming unit 3 and the evaporation unit 2, the submersion of the reforming catalyst provided in the reforming unit 3, and the promotion of degradation of the reforming catalyst due to the water vapor may be caused. In order to suppress the defects, the upper limit value of the predetermined range concerning the elapsed time T is set based on a suitable S/C value. Furthermore, when the water vapor supplied to the evaporation unit 2 of the power generation module 18 is too little, the water vapor becomes short in the reforming reaction. In this case, there is a concern that coking (the generation of the carbon component) in the reforming unit 3 is generated, and the defects of the breakdown or the degradation of the reforming unit 3 of the power generation module 18 may be caused. In order to suppress the defects, the upper limit value of the predetermined range concerning the elapsed time T is set based on a suitable S/C value.

As described above, according to the present embodiment, the control unit 100 executes the water supply abnormality determination control for each startup of the power generation operation of the system and/or for each finishing stop of the power generation operation of the system, and may determine whether or not the water sensor 87, the water pump 80, and the water supply passage 8 have broken down. The water supply abnormality determination processing may be executed during stop of the power generation operation of the system.

In this manner, by the execution of the water supply abnormality determination control using the control unit 100, it is possible to conveniently perform the determination of normality or abnormality of the water supply to the evaporation unit 2 of the power generation module 18 in a regular or irregular manner. For this reason, it is possible to set the supply flow rate of the reforming water to the evaporation unit 2 of the power generation module 18 within the predetermined range. As a result, it is possible to suppress the breakdown and the degradation in the evaporation unit 2, the reforming unit 3 and the fuel cell 1 mounted on the power generation module 18 due to the surplus or the lack of the reforming water.

### [Embodiment 2]

Since the present embodiment has basically the same configuration, the same operation and the same work as Embodiment 1, Figs. 1 and 2 are applied correspondingly. The contents of the water supply abnormality determination control are basically the same as those of Embodiment 1. The present embodiment is able to adopt at least one of aspects (a) to (d). As needed, the present embodiment may be applied to other embodiments.
(a) The above-mentioned water supply abnormality determination processing may be performed at a predetermined time interval ΔT several times, the data of the elapsed time T may be selected several times (n times). In this case, an average value of the first time to the n-th time for the elapsed time may be set to the elapsed time. In this case, the time required per each water supply abnormality determination processing, in which the abnormal data can be removed, is short.
(b) According to the present embodiment, after the returning operation of (i) is finished, after waiting for ΔTwait (for example, certain values of 100 milliseconds to 180 seconds, the values are not limited), the water supply operation of (ii) may be started. While waiting for ΔTwait, it is possible to expect that the water droplets or the like attached to an inner wall surface of the piping of the water supply passage 8 are caused to effectively flow down in the water tank 4 by gravity. In this case, the degree of emptying of the water supply passage 8 can be increased, and it is advantageous to increasing the determination accuracy in the determination operation.
(c) According to the present embodiment, the DUTY value instructed to the motor 82 in the returning operation of the above-mentioned (i) is set to Dr, and the DUTY value instructed to the motor 82 in the water supply operation of the above-mentioned (ii) is set to Ds. In this case, Dr = Ds may be set. Dr > Ds may be set. Dr < Ds may be set. If Dr < Ds, it is possible to shorten the time required for the water supply abnormality determination processing. If Dr > Ds, the revolution frequency of the water pump 80 per unit time can be slowed down in the water supply operation rather than the returning operation. For this reason, the water level of the water supply passage 8 can be slowly raised in the water supply operation, it is advantageous to suppressing the entrainment (a cause of noise) of the air to the water supply passage 8, and the determination accuracy in the determination operation can be improved.
(d) Furthermore, according to the present embodiment, the number of revolutions per unit time instructed to the motor 82 in the returning operation of the above-mentioned (i) is set to Nrc, and the number of revolutions per unit time instructed to the motor 82 in the water supply operation of the above-mentioned (ii) is set to Nsc. In this case, Nrc = Nsc may be set. Nrc > Nsc may be set. Nrc < Nsc may be set. If Nrc < Nsc, it is possible to shorten the time required for the water supply operation. If Nrc > Nsc, the revolution number of the water pump 80 per unit time can be slowed down in the water supply operation rather than the returning operation. For this reason, the water level of the water supply passage 8 can be slowly raised in the water supply operation, it is advantageous to suppressing the entrainment of the air to the water supply passage 8, and the determination accuracy in the determination operation can be improved.

### [Embodiment 3]

Since the present embodiment has basically the same configuration, the same operation and the same work as Embodiment 1, Figs. 1 and 2 are applied correspondingly. The contents of the water supply abnormality determination control are basically the same as those of Embodiment 1. The motor 82 of the water pump 80 is a step motor. The control unit 100 inputs the total number of pulses to the drive circuit of the step motor, and rotates and drives the step motor.
(i) The step motor is reversely rotated, the water pump 80 is reversely rotated, and the reforming water existing from the outlet port 80p of the water pump 80 to the inlet port 2i of the evaporation unit 2 of the power generation module 18 in the water supply passage 8 is returned to the water tank 4. Thereby, the reforming water in the water supply passage 8 is emptied. There may be waiting for a time of ΔTwait between (i) and (ii) as needed.
(ii) A plurality of pulses are continuously input to the drive circuit of the motor 82 (the step motor) of the water pump 80, and the step motor is continuously positively rotated. Thereby, the water supply operation that supplies the reforming water in the water tank 4 to the water supply passage 8 is executed. At this time, from the starting time of the water supply operation to the time when the water sensor 87 is turned ON (detects the water), the control unit 100 detects the total number of pulses that is input to the step motor.
(iii) If the total number of pulses before detecting the water presence is out of the predetermined range concerning the total number of pulses, the control unit 100 detects abnormality of the water supply to the evaporation unit 2, determines that at least one of the water sensor 87, the water pump 80 and the water supply passage 8 has broken down, and outputs the alarm. If the total number of pulses until the detection is within the prescribed range, the control unit 100 determines that the water supply to the evaporation unit 2 is normal, that is, determines that the water sensor 87, the water pump 80 and the water supply passage 8 are normal, and finishes the water supply abnormality determination control. In the normal case, the control unit 100 is shifted to the warm-up mode, and the power generation mode. Herein, the lower limit value and the upper limit value of the predetermined range concerning the total number of pulses are preferably determined, based on the S/C value that is determined from the breakdown of the power generation module 18, the degradation of the power generation module 18 or the like.

Even when the water sensor 87 breaks down or the water pump 80 breaks down, in order to prevent the reforming water from excessively being poured to the evaporation unit 2 of the power generation module 18, the lower limit value of the prescribed range of the total number of pulses is set. When the reforming water is excessively supplied to the evaporation unit 2, there is a concern that the defects such as the excessive increase of the amount of the water vapor, the excessive drop of the temperature of the reforming unit 3 and the evaporation unit 2, the submersion of the reforming catalyst provided in the reforming unit 3, and the promotion of degradation of the reforming catalyst due to the water vapor may be caused. In order to suppress the defects, the upper limit value of the predetermined range concerning the total number of pulses is set based on a suitable S/C value. Furthermore, when the water vapor supplied to the evaporation unit 2 of the power generation module 18 is too little, there is a concern that coking (generation of the carbon component) in the reforming unit 3 may be generated, and the defects of the breakdown or the degradation of the reforming unit 3 of the power generation module 18 may be caused. In order to suppress the defects, the upper limit value of the predetermined range concerning the total number of pulses is set based on a suitable S/C value.

### [Embodiment 4]

Since the present embodiment has basically the same configuration, the same operation and the same work as Embodiments 1, 2 and 3, Figs. 1 and 2 are applied correspondingly. When the water remaining in the water supply passage 8 freezes due to chillness, and when the water begins to freeze, there is a concern that a flow path cross-sectional area of the water supply passage 8 may become narrow. In this case, there is a concern that the elapsed time T may fluctuate. Thus, when the temperature detected by the temperature sensor 57 is equal to or greater than a prescribed temperature, the control unit 100 performs the water supply abnormality determination processing. When the temperature detected by the temperature sensor 57 is less than the prescribed temperature (for example, 0°C, -5°C, these temperatures are not limited), the control unit 100 does not perform the water supply abnormality determination processing. In another embodiment, even when the temperature detected by the temperature sensor 57 is equal to or greater than the prescribed temperature, the control unit 100 may also perform the water supply abnormality determination processing.

### [Embodiment 5]

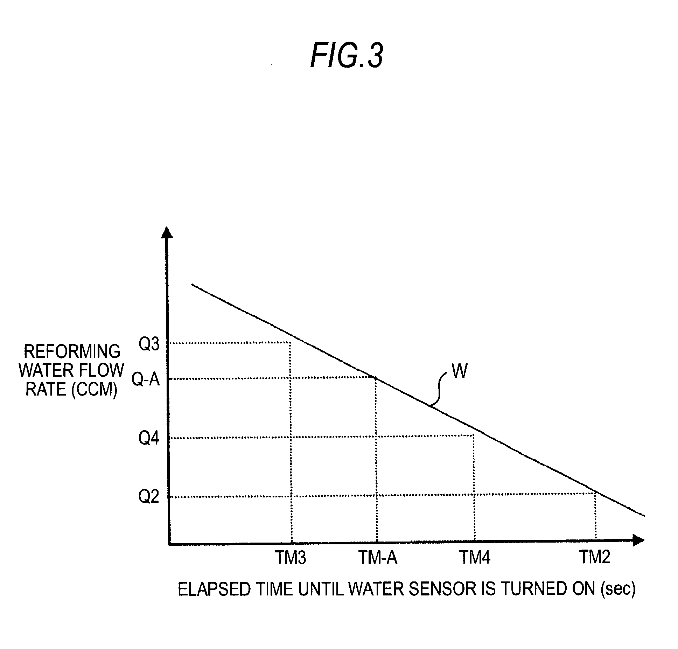

Since the present embodiment has basically the same configuration, the same operation and the same work as Embodiments 1 to 4, Figs. 1 and 2 are applied correspondingly. A passage volume from the water pump 80 to the water sensor 87 in the water supply passage 8 is set to a predetermined amount in the design. For that reason, in the condition that the water pump 80, the water sensor 87 and the water supply passage 8 are normal, when the reforming water is sent by a predetermined flow rate from the state where the water supply passage 8 is empty, the water supply passage 8 is filled with the reforming water and the water sensor 87 detects the water (the water sensor is turned ON). Herein, a relationship between the elapsed time T from the supply starting time of the reforming water to the time when the water sensor 87 is turned ON, and the reforming water flow rate [CCM] per unit time supplied to the water supply passage 8 is illustrated by a characteristic line W of Fig. 3. That is, the characteristic line W of Fig. 3 schematically illustrates the relationship between the elapsed time T [sec] from the starting time of the water supply operation to the time when the water sensor 87 is turned ON and the reforming water flow rate [CCM] flowing through the water supply passage 8. As illustrated as the characteristic line W of Fig. 3, when the reforming water flow rate [CCM] per unit time supplied to the water supply passage 8 by the water pump 80 is great, the elapsed time T from the starting time of the water supply operation to the time when the water sensor 87 is turned ON becomes shorter. When the reforming water flow rate [CCM] per unit time supplied by the water pump 80 is small, the elapsed time T from the starting time of the water supply operation to the time when the water sensor 87 is turned ON becomes longer.

Herein, the reforming water flow rate [CCM] per unit time in the actual power generation operation is determined based on the S/C value that indicates a mole ratio between the flow rate of hydrocarbon serving as the source gas and the water (water vapor) with respect to C in the raw material of hydrocarbon. The S/C value is a value that is determined based on the reforming catalyst in the reforming unit 3, the degradation of the fuel cell 1, the evaporation characteristics of the evaporation unit 2, the efficiency or the like. When the S/C value is too low, there is a concern that the degradation and the breakdown due to the reforming catalyst of the reforming unit 3 and caking (carbon deposition) of the fuel cell 1 may occur. On the contrary, when the S/C value is too high, the efficiency drop due to an increase of a calorific value for vaporizing the injected forming water occurs. Furthermore, there is a concern that the accidental fire defect of the combustion unit due to bumping in the evaporation unit 2, and the degradation of the fuel cell 1 due to the water vapor oxidation may be caused. Thus, it is preferable to set the S/C value within a suitable range in the power generation operation.

In consideration of the above-mentioned circumstances, as an example, the S/C value is preferably set to 2.5. The range of the permissible S/C value is preferably set to 2.0 to 3.0 in consideration of the degradation or the like. According to the characteristic line W of Fig. 3, when the reforming water flow rate corresponding to the S/C value = 2.5 is set to Q - A, the flow rate equivalent to the S/C value = 2.0 is Q4. The flow rate equivalent to the S/C value = 3.0 corresponds to Q3. That is, in the power generation operation, as the permissible range of the S/V value, 2.0 to 3.0 is preferable, and when calculating this value as the elapsed time T from the starting time of the water supply operation to the time when the water sensor 87 is turned ON, the elapsed time T is preferably equivalent to the range of the time TM3 to the time TM4 (see Fig. 3). When the elapsed time T in the water supply abnormality determination processing is within this range, the control unit 100 determines that the water sensor 87, the water pump 80 and the water supply passage 8 are normal, and raises the normal flag. When the elapsed time T is out of this range, the control unit 100 determines that there is a possibility of an occurrence of the defect such as the degradation, determines that the water supply of the reforming water to the evaporation unit 2 is abnormal, and raises the abnormal flag.

Furthermore, in regard to the time TM2 (see Fig. 3), as mentioned above, even when the water sensor 87 breaks down, the reforming water is not excessively supplied to the evaporation unit 2, and the value at which the power generation module 18 does not break down is set as the time TM2.

### [Embodiment 6]

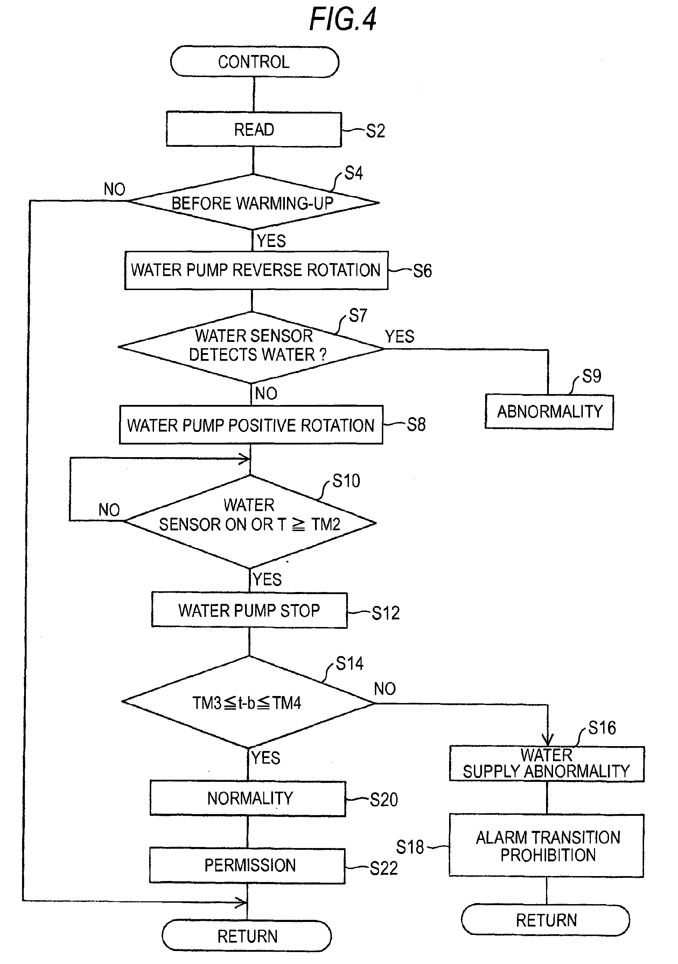

Fig. 4 illustrates Embodiment 6. Since the present embodiment has basically the same configuration, the same operation and the same work as Embodiment 1, Figs. 1 to 3 are applied correspondingly. In the water supply abnormality determination control, the control unit 100 drives the water pump 80 by the DUTY value or the revolution number instructed to the water pump 80. Fig. 4 illustrates a control example. When the startup instruction is input to the control unit 100 by a user or the control unit 100, the control unit 100 starts the flow chart of Fig. 4. First, the control unit 100 reads information of various sensors, switches and devices (step S2), and determines whether or not the present time is before the warm-up mode transition based on the information (step S4). When the present time is before the warm-up mode transition, the control unit 100 reversely rotates the water pump 80, executes the returning operation that returns the reforming water existing downstream of the water pump 80 to the water tank 4 in the water supply passage 8, and empties the water of the water supply passage 8 (Step S6). In such a returning operation, an instruction flow rate of the supplied reforming water is set to Q1 [CCM], an instruction DUTY value to the motor 82 is set to D1, and an operating time is set to TM1 [sec]. These values are preset as numerical values in which the reforming water from the outlet port 80p of the water pump 80 to the water sensor 87 in the water supply passage 8 reliably returns to the water tank 4 and the reforming water in the water supply passage 8 disappears, and are stored in the memory 100m of the control unit 100.

Next, after a predetermined time, it is determined whether or not the water sensor 87 detects the water (whether or not turned ON) (Step S7). When the water sensor 87 detects the water (YES in Step S7), it is possible to determine that the water pump 80 does not reversely rotate due to the breakdown and the water does not fall out, or the water falls out but "water detection (ON)" is detected due to abnormality of the water sensor 87, and thus the control unit 100 detects abnormality (Step S9).

Meanwhile, when the water sensor 87 does not detect the water in Step S7, (NO in Step S7), the instruction flow rate is set to Q - A [CCM] with respect to the water pump 80 as the water supply operation, the DUTY value is set as D2, the water pump 80 is positively rotated, and the reforming water of the water tank 4 is supplied toward the water sensor 87 (Step S8).

In addition, the relationship of D2 = D1, the relationship of D2 < D1, and the relationship of D2>D1 may be set. If D2 < D1, the water pump 80 is slowed down in the water supply operation, the excessive rising speed of the water level of the water supply passage 8 is suppressed, and thus it is advantageous to suppressing the entrainment of the air. Furthermore, the time until the water sensor 87 is turned ON becomes longer, whereby the detection accuracy of the reforming water flow rate in Fig. 3 is raised. In addition, after performing step S6, as needed, there may be waiting for the ΔTwait time. In this case, the water of the water supply passage 8 is caused to flow down by gravity, and thus it is possible to expect that the degree of the emptying in the water supply passage 8 is raised.

After that, it is determined whether or not the water sensor 87 detects the water and is turned ON or the elapsed time T from the starting time (the starting time of the water supply operation) of the positive rotation of the motor 82 is equal to or greater than the time TM2 [sec] (Step S10). When this condition is not satisfied, the water supply operation is continued (NO in Step S10). When this condition is satisfied, the control unit 100 finishes the water supply operation (YES in Step S10). Next, driving of the water pump 80 is stopped (Step S12). In Step S10, even if the water exists near the water sensor 87, when the water sensor 87 is not turned ON, it is considered that the water sensor 87 has broken down. In this manner, even when the water sensor 87 breaks down, based on the reforming water flow rate in which the supply of the reforming water to the evaporation unit 2 of the power generation module 18 is permitted, the above-mentioned time TM2 [sec] is determined as the threshold physical quantity in advance. Specifically, even if the positive rotation of the water pump 80 is continued and the reforming water is excessively and continuously supplied to the water supply passage 8, the time of the extent that the reforming catalyst or the like provided in the reforming unit 3 of the power generation module 18 is buried in the liquefied reforming water or the reforming catalyst is not degraded, is preset as the time TM2 [sec], and is stored in the memory 100m of the control unit 100.

The elapsed time T from the starting time of the water supply operation to the time when the water sensor 87 is turned ON is considered as an elapsed time t - b. In regard to the elapsed time t - b, the control unit 100 determines whether or not a formula of TM3 ≤ t - b ≤ TM4 holds (Step S14, see Fig. 3). When this condition is satisfied, the control unit 100 determines that the water supply abnormality determination control is executed without a problem, and the water sensor 87, the water pump 80 and the water supply passage 8 are normal (Step S20), raises the normal flag, and permits the transition to the warm-up mode that warms up the power generation module 18 (Step S22). In the warm-up mode, the reforming unit 3 and the evaporation unit 2 are heated to a temperature region that is suitable for the water vapor reforming. When the warm-up mode is normally finished, the control unit 100 is shifted to the power generation mode. When the above-mentioned formula does not hold (NO in Step S 14), the control unit 100 determines that the supply of the reforming water to the evaporation unit 2 is abnormal (Step S16). That is, the control unit 100 determines that the water supply system has broken down, raises the abnormal flag, issues the abnormal signal to the alarm unit 102 (step S18), and prohibits the transition to the warm-up mode and the power generation mode (Step S 18).

As described above, according to the present embodiment, it is possible to cope with a case where the water sensor 87 breaks down. That is, if the water sensor 87 breaks down, although the normal water pump 80 continuously positively rotates and supplies the reforming water to the water supply passage 8, the water sensor 87 is not turned ON. In this case, since the water pump 80 continuously positively rotates, the time TM2 [sec] is preset as the threshold physical quantity that is greater than the upper limit of the prescribed range so that the reforming water is not excessively supplied to the evaporation unit 2 and the reforming unit 3 of the power generation module 18 (Step S10). Moreover, in the condition that the water supply operation is executed by the control unit 100, when the water sensor 87 is not continuously turned ON indefinitely, if the elapsed time T (the physical quantity) measured from the starting time of the water supply operation becomes greater than the time TM2 [sec] (the threshold physical quantity), the control unit 100 determines that the water supply system has broken down. Moreover, the control unit 100 stops the positive rotation of the water pump 80, determines that the water supply to the evaporation unit is abnormal, outputs the alarm, and suppresses the excessive supply of the reforming water to the evaporation unit 2. The alarm can include at least any one of the output of the alarm signal to the alarm unit 102 and the operation stop of the system.

Furthermore, according to the present embodiment, it is also possible to cope with a case where the water pump 80 breaks down. That is, if the water pump 80 breaks down, although the control unit 100 outputs the instruction of supplying the reforming water to the water supply passage 8 with respect to the water pump 80, and although the water sensor 87 is normal, the water sensor 87 is not turned ON. For this reason, the time TM2 [sec] is preset as the threshold physical quantity greater than the upper limit of the prescribed range so that the reforming water supplied to the evaporation unit 2 and the reforming unit 3 of the power generation module 18 is not lacking (see Fig. 3). According to Fig. 3, there is a relationship of TM3 < TM - A < TM4 < TM2. Moreover, when the water supply operation is continuously executed by the control unit 100, in the condition that the water sensor 87 is not continuously turned ON indefinitely, when the elapsed time T (the physical quantity) measured from the starting time of the water supply operation becomes greater than the time TM2 [sec] (the threshold physical quantity), the control unit 100 can determine the breakdown of the water supply system, that is, the breakdown of at least one of the water sensor 87, the water pump 80 and the water supply passage 8. Moreover, the control unit 100 outputs the instruction that stops the positive rotation of the water pump 80, determines that the water supply to the evaporation unit 2 is abnormal, outputs the alarm, and suppresses lack of the reforming water supplied to the evaporation unit 2. In addition, the alarm can include at least one of the output of the alarm signal to the alarm unit and the operation stop of the system.

### [Embodiment 7]

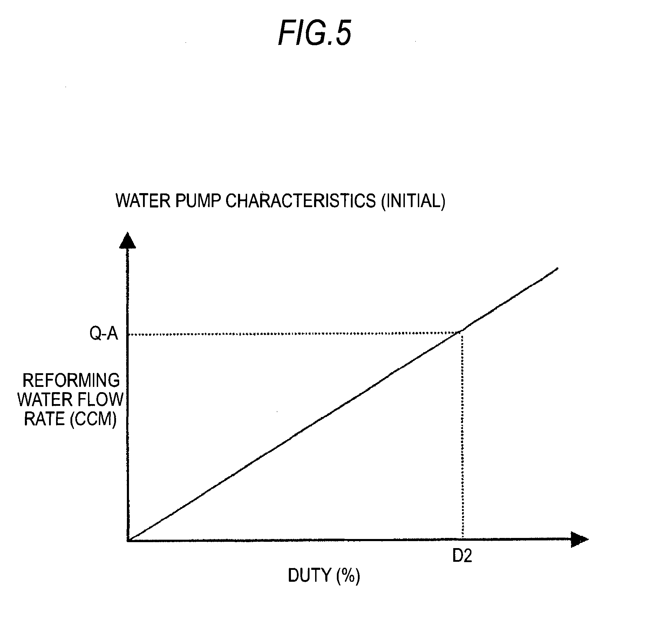

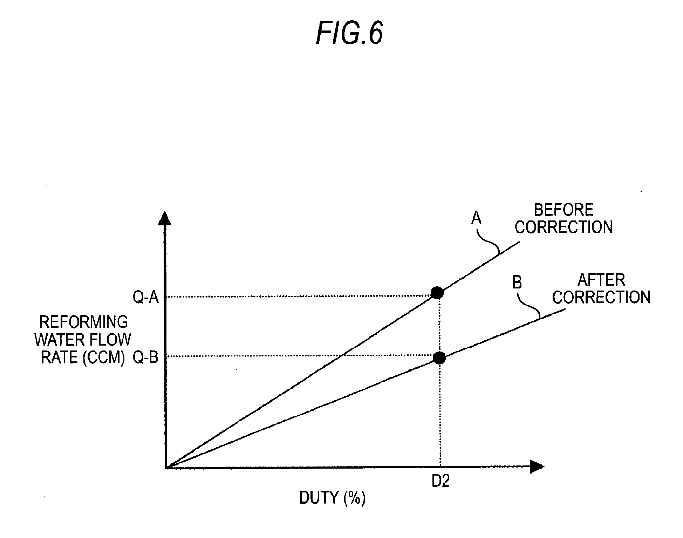

Figs. 5 and 6 illustrate Embodiment 7. Since the present embodiment has basically the same configuration, the same operation and the same work as Embodiments 1 to 4, Figs. 1 to 4 can be applied correspondingly. In the water supply abnormality determination control, when it is determined that the water supply to the evaporation unit 2 is abnormal (when the physical quantity is out of the prescribed range), the control unit 100 corrects and revises a map that shows the correlation between the physical quantity concerning the output of the water pump 80 and the reforming water flow rate supplied to the water supply passage 8.

Fig. 5 illustrates initial pump characteristics of the water pump 80 that is not subject to temporal change. As illustrated in Fig. 5, when the DUTY value that is input to the motor 82 of the water pump 80 increases, the reforming water flow rate [CCM] per unit time supplied by the positive rotation of the water pump 80 increases. The DUTY value corresponds to an electric current value that is supplied to the motor 82. As illustrated in Fig. 5, when the DUTY value is D2 (%), the reforming water flow rate per unit time supplied by the water pump 80 is Q - A [CCM]. In this manner, when the reforming water flow rate is Q - A [CCM], according to Fig. 3, the elapsed time T from the starting time of the water supply operation to the time when the water sensor 87 is turned ON is TM - A [sec], and is within the range of the times TM3 to TM4 serving as a permissible range.

Fig. 6 illustrates a case where, although the DUTY value of the motor driving the water pump 80 is set to D2 (%), due to the temporal change or the like of the water pump 80, the reforming water flow rate per unit time supplied by the water pump 80 changes from Q - A [CCM] serving as an initial value to Q - B [CCM]. From the elapsed time from the water supply start when performing the water supply processing to the time when the water sensor 87 is turned ON, the change of the reforming water flow rate to Q - B is detected using Fig. 3. In this case, as illustrated in Fig. 6, the relationship between the DUTY value and the reforming water flow rate is corrected from the characteristic line A to the characteristic line B. The correction result in the relationship between the DUTY value and the reforming water flow rate is updated and stored in an area of the memory 100m of the control unit 100. The control unit 100 updates the relationship between the DUTY value of the water pump 80 and the reforming water flow rate [CCM] per unit time supplied by the water pump 80 in the control after the correction, based not on the characteristic line A but on the characteristic line B. When updating in this manner, there is an advantage that the operation can be continuously performed even when not stopping the fuel cell system fully. The correction in the pump characteristics of the water pump 80 is effective in a case where a zero point thereof does not substantially fluctuate, and only a slope of the characteristic line changes.

When correcting as mentioned above, even if the reforming water flow rate per unit time supplied to the water supply passage 8 fluctuates due to the degradation and the pressure loss change of the water pump 80, the relationship between the DUTY value of the water pump 80 and the reforming water flow rate [CCM] per unit time supplied by the water pump 80 is updated. For this reason, the breakdown and the degradation of the power generation module 18 are suppressed while continuing the operation, without stopping the operation of the system fully. In this manner, it is possible to suppress the increase of the maintenance cost and the running cost for a user.

In addition, the correction is preferably performed when the physical quantity (the elapsed time or in a case where the motor 82 is a step motor, the total number of pulses that is input to the step motor) from the starting time (the time when the water pump 80 is turned ON in the water supply operation) of the water supply operation to the time when the water sensor 87 is turned ON is out of the prescribed range. Otherwise, even when the physical quantity is within the prescribed range, the correction can be performed when the water supply abnormality determination processing is finished. In this case, it is possible to rapidly cope with the temporal change of the pump characteristics.

### [Embodiment 8]

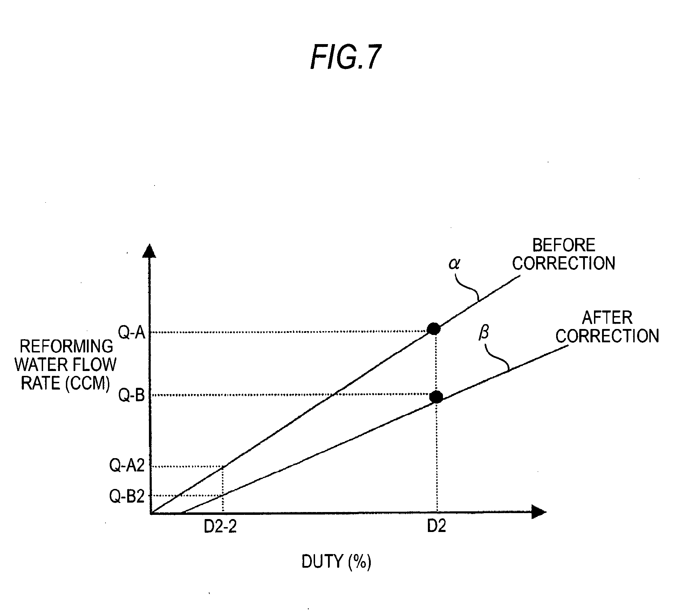

Fig. 7 illustrates Embodiment 8. Since the present embodiment has basically the same configuration, the same operation and the same work as Embodiments 1 to 7, Figs. 1 to 5 can be applied correspondingly. According to the present embodiment, in the water supply abnormality determination control, when it is determined that the water supply to the evaporation unit 2 is abnormal (when the physical quantity is out of the prescribed range), the control unit 100 corrects and revises the characteristics (map) that show the correlation between the physical quantity concerning the output of the water pump 80 and the reforming water flow rate supplied to the water supply passage 8. In the correction, the DUTY value of the water pump 80 is set to 2 levels. That is, the DUTY value of the water pump 80 is subjected to processing of the 2 levels of the measurement of the elapsed time until the water sensor is turned ON due to the water supply by D2 (%) and the measurement of the elapsed time until the water sensor is turned ON due to the water supply by D2 - 2 (%) for the drain processing. Thereby, in the water supply abnormality determination processing, the reforming water flow rate is changed to 2 levels.

A characteristic line α of Fig. 7 illustrates initial pump characteristics of the water pump 80 that is not subject to temporal change. As illustrated by the characteristic line α of Fig. 7, when the DUTY value of the water pump 80 increases, the reforming water flow rate [CCM] per unit time supplied by the water pump 80 increases. Before the correction, according to the characteristic line α of Fig. 7, when the DUTY value is D2 (%), the reforming water flow rate per unit time supplied by the water pump 80 is Q - A [CCM]. Furthermore, before the correction, according to the characteristic line α of Fig. 7, when the DUTY value is D2 -2 (%), the reforming water flow rate per unit time supplied by the water pump 80 is Q - A2 [CCM]. The pump characteristics of the pump gradually change due to the temporal change.

Although the DUTY value of the motor driving the water pump 80 is set to D2 (%), a characteristic line β of Fig. 7 shows a case where the reforming water flow rate per unit time supplied by the water pump 80 changes to Q - B [CCM]. Like Embodiment 7, based on Fig. 3, the reforming water flow rate is calculated from the elapsed time from the water supply start. Furthermore, although the DUTY value of the motor driving the water pump 80 is set to D2 - 2 (%), the characteristic line β of Fig. 7 shows that the reforming water flow rate per unit time supplied by the water pump 80 changes from Q - A2 [CCM] to Q - B2 [CCM] due to the temporal change or the like of the water pump 80. In this case, as illustrated in Fig. 7, the control unit 100 corrects the relationship between the DUTY value of the water pump 80 and the reforming water flow rate [CCM] per unit time supplied from the water pump 80 from the characteristic line α to the characteristic line β. The correction result is stored in the area of the memory 100m of the control unit 100, and in the control after the correction, based not on the characteristic line α but on the characteristic line β, the relationship between the DUTY value of the water pump 80 and the reforming water flow rate [CCM] per unit time supplied by the water pump 80 is regulated.

As mentioned above, when the pump characteristics showing the relationship between the DUTY value of the water pump 80 and the reforming water flow rate change due to the deterioration, or the degradation or the like of the water pump 80, the above-mentioned correction is executed. Thereby, even if the operation of the fuel cell system is not stopped to perform the maintenance, the required reforming water flow rate can be sent to the power generation module 18, and thus the deterioration and the breakdown of the power generation module 18 can be suppressed. According to the present embodiment, the system is not promptly stopped in the abnormal state of the water supply, but the relationship between the DUTY value of the water pump 80 and the reforming water flow rate [CCM] per unit time supplied by the water pump 80 is corrected. For this reason, since the operation of the system can be continued, an increase in economic cost for a user or the like can be suppressed.

### [Embodiment 9]

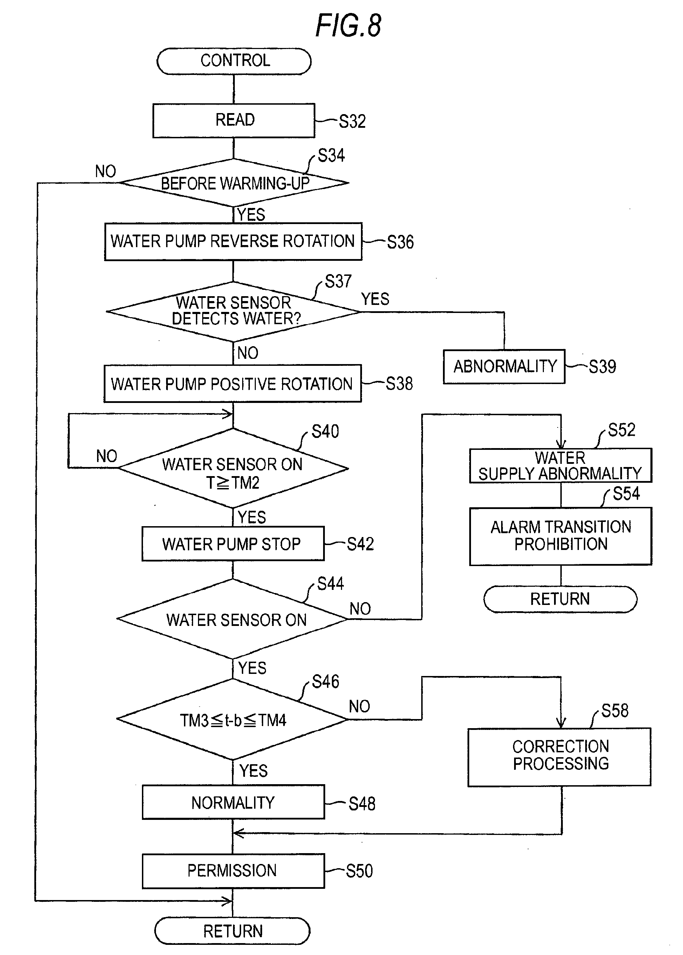

Since the present embodiment has basically the same configuration, the same operation and the same work as the above-mentioned embodiments, Figs. 1 to 3 and 5 to 7 can be applied correspondingly. According to the present embodiment, in the water supply abnormality determination control, the control unit 100 drives the water pump 80 at the DUTY value or the revolution number. Fig. 8 illustrates a control example. When the startup instruction is input to the control unit 100 by a user or the control unit 100, the control unit 100 starts the flow chart of Fig. 8. First, the control unit 100 reads information of various sensors, switches and devices (Step S32), and determines whether or not the present time is before the warm-up mode transition based on the information (Step S34). When the present time is before the warm-up mode transition, the control unit 100 performs the water supply abnormality determination processing. In this case, the control unit 100 reversely rotates the water pump 80, executes the returning operation that returns the reforming water existing downstream of the water pump 80 to the water tank 4 in the water supply passage 8, and empties the water of the water supply passage 8 (Step S36). In the returning operation, an instruction flow rate of the supplied reforming water is set to Q1 [CCM], an instruction DUTY value to the motor 80 is set to D1, and an operating time of the motor 80 is set to TM1 [sec]. These values are preset as numerical values in which the reforming water in the passage from the outlet port 80p of the water pump 80 to the water sensor 87 in the water supply passage 8 reliably returns to the water tank 4 and the reforming water in the passage disappears, and are stored in the memory 100m of the control unit 100.

Next, after a predetermined time, it is determined whether or not the water sensor 87 detects the water (whether or not turned ON) (Step S37). When the water sensor 87 detects the water (YES in Step S37), it is possible to determine that the water pump 80 does not reversely rotate due to the breakdown and the water does not fall out, or the water falls out but due to abnormality of the water sensor 87, "water detection (ON)" is detected, and thus the control unit 100 detects abnormality (Step S39).

Meanwhile, when the water sensor 87 does not detect the water in Step S37, (NO in Step S37), the control unit 100 sets the instruction flow rate to Q - A [CCM] with respect to the water pump 80 as the water supply operation, sets the DUTY value as D2, positively rotates the water pump 80, and supplies the reforming water of the water tank 4 toward the water sensor 87 (Step S38). In addition, the relationship of D2 = D1, the relationship of D2 < D1, and the relationship of D2 > D1 may be set. If D2 < D1, since the rising speed of the water level of the water supply passage 8 is suppressed, it is advantageous to suppressing the entrainment of the air in the water supply passage 8. Furthermore, the time until the water sensor 87 is turned on becomes longer, whereby the detection accuracy of the reforming water flow rate in Fig. 3 is raised. In addition, after performing step S6, as needed, there may be waiting for the ΔTwait time. In this case, the water of the water supply passage 8 is caused to flow down by gravity, and thus it is possible to expect that the degree of the emptying in the water supply passage 8 is raised.

After that, the control unit 100 determines whether or not the water sensor 87 detects the water and is turned ON or the elapsed time T from the starting time (the starting time of the water supply operation) of the positive rotation of the motor is equal to or greater than the time TM2 [sec] (Step S40). When this condition is not satisfied, the water supply operation is continued (NO in Step S40). When this condition is satisfied, the control unit 100 finishes the water supply operation (YES in Step S40). Next, driving of the water pump 80 is stopped (Step S42). In Step S40, even if the water exists near the water sensor 87, when the water sensor 87 is not turned ON, it is considered that the water sensor 87 has broken down. In this manner, even when the water sensor 87 breaks down, based on the reforming water flow rate in which the supply of the reforming water to the evaporation unit 2 of the power generation module 18 is permitted, the above-mentioned time TM2 [sec] is determined as the threshold physical quantity in advance. Specifically, even if the positive rotation of the water pump 80 is continued and the reforming water is excessively and continuously supplied to the water supply passage 8, the time of the extent that the reforming catalyst or the like provided in the reforming unit 3 of the power generation module 18 is buried in the liquefied reforming water and the reforming catalyst is not degraded is preset as the time TM2 [sec], and is stored in the memory 100m of the control unit 100.

It is determined whether or not the water sensor 87 is turned ON (Step S44). When the water sensor 87 is turned ON (YES in Step S44), the process proceeds to Step S46. The elapsed time T from the starting time of the water supply operation to the time when the water sensor 87 is turned ON is considered as an elapsed time t - b. In regard to the elapsed time t - b, the control unit 100 determines whether or not a formula of TM3 ≤ t - b ≤ TM4 holds (Step S46). When this condition is satisfied, the control unit 100 determines that the water supply abnormality determination control is executed without a problem, and the water sensor 87, the water pump 80 and the water supply passage 8 are normal (Step S48), raises the normal flag, and permits the transition to the warm-up mode that warms up the power generation module 18 and the power generation mode (Step S50). In the warm-up mode, the reforming unit 3 and the evaporation unit 2 are heated to a temperature region that is suitable for the water vapor reforming. When the warm-up mode is normally finished, the control unit 100 is shifted to the power generation mode.

When the water sensor 87 is not turned ON in Step S44 (NO in Step S44), the control unit 100 determines that the supply of the reforming water to the evaporation unit 2 is abnormal (Step S52). That is, the control unit 100 determines that at least one of the water sensor 87, the water pump 80 and the water supply passage 8 has broken down, issues the abnormal signal to the alarm unit 102, and prohibits the transition to the warm-up mode and the power generation mode (Step S54).

In Step S46, the control unit 100 determines whether or not a formula of TM3 ≤ t - b ≤ TM4 holds. When this formula holds, the control unit 100 determines that the water supply abnormality determination control is executed without a problem, and the water supply system is normal (Step S48) as described above, and permits the transition to the warm-up mode that warms up the power generation module 18 and the power generation mode (Step S50). In the warm-up mode, the reforming unit 3 and the evaporation unit 2 are heated to a temperature region that is suitable for the water vapor reforming. When the warm-up mode is normally finished, the control unit 100 is shifted to the power generation mode. When the above-mentioned formula does not hold (NO in Step S46), the control unit 100 determines that the water pump 80 is subject to temporal change, further executes the correction processing (Step S58), and then proceeds to Step S50.

As described above, according to the present embodiment, as mentioned above, it is possible to cope with a case where the water sensor 87 or the water pump 80 breaks down. That is, if the water pump 80 is normal and the water sensor 87 breaks down, although the normal water pump 80 continuously positively rotates to supply the reforming water to the water supply passage 8, the water sensor 87 is not turned ON. In this case, the process proceeds to Step S52, and the control unit 100 determines that the water sensor 87 or the water pump 80 has broken down.

Furthermore, according to the present embodiment, although the water pump 80 is turned ON, when the formula of TM3 ≤ t - b ≤ TM4 does not hold (NO in Step S46), the elapsed time t - b from the starting time of the water supply operation to the time when the water sensor 87 is turned ON becomes excessively longer or becomes excessively shorter. In this case, the control unit 100 determines that the water pump 80 has been subject to temporal change, and executes the correction processing illustrated in Fig. 6 or the correction processing illustrated in Fig. 7. When the correction processing is finished, the transition to the warm-up mode and the power generation mode is permitted (Step S50).

### [Others]

This disclosure is not limited to the respective embodiments described above and illustrated in the drawings, but can be suitably changed and executed within a scope that does not depart from the gist thereof. The fuel cell 1 is not limited to the solid oxide type fuel cell (SOFC), but, in some cases, the fuel cell 1 may be a polymer electrolyte fuel cell also called PEFC (an operating temperature: for example, 70 to 100°C), may be a phosphoric acid type fuel cell also called PAFC, and may be other types of fuel cells. In short, a fuel cell system having the evaporation unit 2, which forms the water vapor performing the water vapor reforming the gaseous or liquefied fuel from the reforming water, may be adopted. The heating unit 40 is provided in the water tank 4 but may be omitted.

A fuel cell system is provided which includes a fuel cell (1), an evaporation unit (2), a reforming unit (3), a water tank (4), a water supply passage (8), a water conveyance source (8A), a water sensor (87), and a control unit (100). The control unit (100) executes water supply abnormality determination processing of the water supply to the water sensor side. The water supply abnormality determination processing includes returning a reforming water of the water supply passage (8) to the water tank (4), supplying the reforming water of the water tank (4) to the water supply passage (8) in a state of emptying the reforming water of the water supply passage (8), obtaining a physical quantity concerning the output of the water conveyance source (8A) that is required until the water sensor (87) detects a water, and determining that the water supply to the evaporation unit (2) is abnormal when the physical quantity in the water supply operation is out of a prescribed range.

## Claims

1. A fuel cell system comprising:
a fuel cell (1) that is supplied with an anode gas and a cathode gas to perform power generation;
an evaporation unit (2) that evaporates a reforming water to generate water vapor;
a reforming unit (3) that reforms a source gas using the water vapor generated in the evaporation unit (2) to form anode gas;
a water tank (4) that collects the reforming water before being supplied to the evaporation unit (2);
a water supply passage (8) through which the water tank (4) and the evaporation unit (2) communicate with each other to supply the reforming water in the water tank (4) to the evaporation unit (2);
a water conveyance source (8A) that is placed in the water supply passage (8) or the water tank (4), and is able to switch between a positive rotatable state of supplying the reforming water in the water tank (4) to the evaporation unit (2) and a reverse rotatable state of returning the reforming water of the water supply passage (8) to the water tank (4);
a water sensor (87) that is provided upstream of the evaporation unit (2) and downstream of the water conveyance source (8A) in the water supply passage (8) to detect the existence of the water; and
a control unit (100) to which a detection signal of the water sensor (87) is input to control the water conveyance source (8A),
wherein the control unit (100) executes water supply abnormality determination processing of the water supply to the water sensor side, in any one of before starting a power generation operation of the fuel cell (1), after finishing the power generation operation of the fuel cell (1), and during stop of the power generation operation of the fuel cell (1), and
wherein the water supply abnormality determination processing includes
a returning operation that returns the reforming water of the water supply passage (8) to the water tank (4) by reversely rotating the water conveyance source (8A) to empty the reforming water of the water supply passage (8),
a water supply operation that supplies the reforming water of the water tank (4) to the water supply passage (8) by positively rotating the water conveyance source (8A) in a state of emptying the reforming water of the water supply passage (8), and obtains a physical quantity concerning the output of the water conveyance source (8A) that is required until the water sensor (87) detects the water, and
a determination operation that determines whether or not the physical quantity in the water supply operation is within a prescribed range, determines that the water supply to the evaporation unit (2) is normal when the physical quantity is within the prescribed range, and determines that the water supply to the evaporation unit (2) is abnormal when the physical quantity in the water supply operation is out of the prescribed range.

2. The fuel cell system according to claim 1,
wherein, in the water supply operation of the water supply abnormality determination processing, the physical quantity concerning the output of the water conveyance source (8A) required before detecting the water using the water sensor (87) is an elapsed time from a starting time of the water supply operation to a time when the water sensor (87) detects the water.

3. The fuel cell system according to claim 1,
wherein the water conveyance source (8A) includes a pump and a step motor adapted to rotate the pump, and
wherein in the water supply operation, the physical quantity concerning the output of the water conveyance source (8A) required before detecting the water using the water sensor (87) is a total number of pulses that is input to the step motor from the starting time of the water supply operation to the time when the water sensor (87) detects the water.

4. The fuel cell system according to any one of claims 1 to 3,
wherein the control unit (100) corrects characteristics that indicate a correlation between the physical quantity concerning the output of the water conveyance source (8A) and the reforming water flow rate supplied to the water supply passage (8), when the physical quantity is out of the prescribed range or when the water supply abnormality determination processing is finished.

5. The fuel cell system according to any one of claims 1 to 4,
wherein a threshold physical quantity greater than an upper limit of the prescribed range is set, and
wherein in a case where the water sensor (87) does not detect the water in the condition that the water supply operation is executed, when the physical quantity measured from the starting time of the water supply operation becomes greater than the threshold physical quantity, the control unit (100) stops the positive rotation of the water conveyance source (8A) performing the water supply operation, determines that the water supply to the evaporation unit (2) is abnormal, and suppresses the oversupply of the reforming water to the evaporation unit (2).

## Patentansprüche

1. Brennstoffzellensystem mit
einer Brennstoffzelle (1), die mit einem Anodengas und einem Kathodengas beliefert wird, um eine Energieerzeugung durchzuführen;
einer Verdampfereinheit (2), die ein Reformierungswasser verdampft, um Wasserdampf zu erzeugen;
einer Reformereinheit (3), die ein Basisgas unter Verwendung des in der Verdampfereinheit (2) erzeugten Wasserdampfs reformiert, um Anodengas zu bilden;
einem Wasserbehälter (4), der das Reformierungswasser sammelt, bevor es der Verdampfereinheit (2) zugeführt wird;
einem Wasserversorgungskanal (8), durch den der Wasserbehälter (4) und die Verdampfereinheit (2) miteinander verbunden sind, um der Verdampfereinheit (2) das Reformierungswasser aus dem Wasserbehälter (4) zuzuführen;
einer Wasserförderquelle (8A), die in dem Wasserversorgungskanal (8) oder dem Wasserbehälter (4) angeordnet ist und in der Lage ist, zwischen einem positiven Umlaufzustand der Zufuhr des Reformierungswassers aus dem Wasserbehälter (4) zu der Verdampfereinheit (2) und einem umgekehrten Umlaufzustand der Rückführung des Reformierungswassers aus dem Wasserversorgungskanal (8) zu dem Wasserbehälter (4) umzuschalten;
einem Wassersensor (87), der stromaufwärts der Verdampfereinheit (2) und stromabwärts der Wasserförderquelle (8A) in dem Wasserversorgungskanal (8) vorgesehen ist, um das Vorhandensein des Wassers zu erfassen; und
einer Steuereinheit (100), der ein Erfassungssignal des Wassersensors (87) eingegeben wird, um die Wasserförderquelle (8A) zu steuern,
wobei die Steuereinheit (100) einen wassersensorseitigen Wasserversorgungsanomalitätsbestimmungsvorgang der Wasserversorgung vor Beginn eines Energieerzeugungsvorgangs der Brennstoffzelle (1) und/oder nach Beenden des Energieerzeugungsvorgangs der Brennstoffzelle (1), und/oder während einer Unterbrechung des Energieerzeugungsvorgangs der Brennstoffzelle (1) ausführt, und
wobei der Wasserversorgungsanomalitätsbestimmungsvorgang Folgendes umfasst:
einen Rückführvorgang, der das Reformierungswasser aus dem Wasserversorgungskanal (8) zu dem Wasserbehälter (4) zurückführt, indem die Wasserförderquelle (8A) umgekehrt gedreht wird, um das Reformierungswasser aus dem Wasserversorgungskanal (8) zu entleeren,
einen Wasserzuführvorgang, der dem Wasserversorgungskanal (8) das Reformierungswasser aus dem Wasserbehälter (4) zuführt, indem die Wasserförderquelle (8A) in einem Zustand positiv gedreht wird, in dem das Reformierungswasser aus dem Wasserversorgungskanal (8) entleert wird, und der eine physikalische Größe hinsichtlich der Ausgabe der Wasserförderquelle (8A) erlangt, die nötig ist, bis der Wassersensor (87) das Wasser erfasst, und
einen Bestimmungsvorgang, der bestimmt, ob die physikalische Größe in dem Wasserzuführvorgang innerhalb eines vorgegebenen Bereichs ist oder nicht, der bestimmt, dass die Wasserzufuhr zu der Verdampfereinheit (2) normal ist, wenn die physikalische Größe innerhalb des vorgegebenen Bereichs ist, und der bestimmt, dass die Wasserversorgung zu der Verdampfereinheit (2) anormal ist, wenn die physikalische Größe in dem Wasserzuführvorgang außerhalb des vorgegebenen Bereichs ist.

2. Brennstoffzellensystem nach Anspruch 1,
wobei in dem Wasserzuführvorgang des Wasserversorgungsanomalitätsbestimmungsvorgangs die physikalische Größe hinsichtlich der Ausgabe der Wasserförderquelle (8A), die vor dem Erfassen des Wassers unter Verwendung des Wassersensors (87) nötig ist, eine verstrichene Zeitspanne von einem Startzeitpunkt des Wasserzuführvorgangs bis zu einem Zeitpunkt ist, wenn der Wassersensor (87) das Wasser erfasst.

3. Brennstoffzellensystem nach Anspruch 1,
wobei die Wasserförderquelle (8A) eine Pumpe und einen Schrittmotor umfasst, der angepasst ist, die Pumpe zu drehen, und
wobei in dem Wasserzuführvorgang die physikalische Größe hinsichtlich der Ausgabe der Wasserförderquelle (8A), die vor dem Erfassen des Wassers unter Verwendung des Wassersensors (87) nötig ist, eine Gesamtanzahl von Impulsen ist, die dem Schrittmotor von dem Startzeitpunkt des Wasserzuführvorgangs bis zu dem Zeitpunkt eingegeben wird, wenn der Wassersensor (87) das Wasser erfasst.

4. Brennstoffzellensystem nach einem der Ansprüche 1 bis 3,
wobei die Steuereinheit (100) Kennlinien, die eine Korrelation zwischen der physikalischen Größe hinsichtlich der Ausgabe der Wasserförderquelle (8A) und dem Reformierungswasserdurchsatz zeigen, der dem Wasserversorgungskanal (8) zugeführt wird, korrigiert, wenn die physikalische Größe außerhalb des vorgegebenen Bereichs ist, oder wenn der Wasserversorgungsanomalitätsbestimmungsvorgang beendet ist.

5. Brennstoffzellensystem nach einem der Ansprüche 1 bis 4,
wobei ein Grenzwert der physikalischen Größe festgelegt ist, der größer als eine Obergrenze des vorgegebenen Bereichs ist, und
wobei in einem Fall, in dem der Wassersensor (87) das Wasser unter der Bedingung nicht erfasst, dass der Wasserzuführvorgang ausgeführt wird, wenn die von dem Startzeitpunkt des Wasserzuführvorgangs gemessene physikalische Größe größer wird als der Grenzwert der physikalischen Größe, die Steuereinheit (100) die positive Drehung der den Wasserzuführvorgang ausführenden Wasserförderquelle (8A) anhält, bestimmt, dass die Wasserversorgung zu der Verdampfereinheit (2) anormal ist und eine Überversorgung der Verdampfereinheit (2) mit dem Reformierungswasser unterdrückt.

## Revendications

1. Système de pile à combustible comprenant :
une pile à combustible (1) qui est alimentée en gaz anodique et en gaz cathodique pour effectuer une production d'énergie ;
une unité d'évaporation (2) qui évapore une eau de reformage pour générer de la vapeur d'eau ;
une unité de reformage (3) qui reforme un gaz source en utilisant la vapeur d'eau générée dans l'unité d'évaporation (2) pour former du gaz anodique ;
un réservoir d'eau (4) qui collecte l'eau de reformage avant d'être fournie à l'unité d'évaporation (2) ;
un passage d'alimentation en eau (8) à travers lequel le réservoir d'eau (4) et l'unité d'évaporation (2) communiquent l'un(e) avec l'autre pour alimenter l'unité d'évaporation (2) en eau de reformage présente dans le réservoir d'eau (4) ;
une source de transport d'eau (8A) qui est placée dans le passage d'alimentation en eau (8) ou le réservoir d'eau (4), et est capable de commuter entre un état de rotation positive permettant d'alimenter l'unité d'évaporation (2) en eau de reformage présente dans le réservoir d'eau (4) et un état de rotation inverse permettant de renvoyer l'eau de reformage du passage d'alimentation en eau (8) vers le réservoir d'eau (4) ;
un capteur d'eau (87) qui est prévu en amont de l'unité d'évaporation (2) et en aval de la source de transport d'eau (8A) dans le passage d'alimentation en eau (8) pour détecter l'existence de l'eau ; et
une unité de commande (100) à laquelle un signal de détection du capteur d'eau (87) est introduit pour commander la source de transport d'eau (8A),
dans lequel l'unité de commande (100) exécute un traitement de détermination d'anomalie d'alimentation en eau de l'alimentation en eau au côté capteur d'eau, dans l'un quelconque des instants suivants : avant de commencer une opération de production d'énergie de la pile à combustible (1), après l'achèvement de l'opération de production d'énergie de la pile à combustible (1), et pendant l'arrêt de l'opération de production d'énergie de la pile à combustible (1), et
dans lequel le traitement de détermination d'anomalie d'alimentation en eau comporte :
une opération de renvoi qui renvoie l'eau de reformage du passage d'alimentation en eau (8) vers le réservoir d'eau (4) par rotation inverse de la source de transport d'eau (8A) pour vider le passage d'alimentation en eau (8) de l'eau de reformage,
une opération d'alimentation en eau qui alimente le passage d'alimentation en eau (8) en eau de reformage du réservoir d'eau (4) par rotation positive de la source de transport d'eau (8A) dans un état de vidage du passage d'alimentation d'eau (8) de l'eau de reformage, et obtient une quantité physique concernant la sortie de la source de transport d'eau (8A) qui est requise jusqu'à ce que le capteur d'eau (87) détecte l'eau, et
une opération de détermination qui détermine si la quantité physique dans l'opération d'alimentation en eau se trouve ou non à l'intérieur d'une plage prescrite, détermine que l'alimentation en eau de l'unité d'évaporation (2) est normale lorsque la quantité physique se trouve à l'intérieur de la plage prescrite, et détermine que l'alimentation en eau de l'unité d'évaporation (2) est anormale lorsque la quantité physique dans l'opération d'alimentation en eau se trouve en dehors de la plage prescrite.

2. Système de pile à combustible selon la revendication 1,
dans lequel, dans l'opération d'alimentation en eau du traitement de détermination d'anomalie d'alimentation en eau, la quantité physique concernant la sortie de la source de transport d'eau (8A) requise avant de détecter l'eau en utilisant le capteur d'eau (87) est un temps écoulé depuis un instant de début de l'opération d'alimentation en eau jusqu'à un instant auquel le capteur d'eau (87) détecte l'eau.

3. Système de pile à combustible selon la revendication 1,
dans lequel la source de transport d'eau (8A) comporte une pompe et un moteur pas à pas adapté pour faire tourner la pompe, et
dans lequel dans l'opération d'alimentation en eau, la quantité physique concernant la sortie de la source de transport d'eau (8A) requise avant la détection de l'eau en utilisant le capteur d'eau (87) est un nombre total d'impulsions qui est introduit au moteur pas à pas depuis l'instant de début de l'opération d'alimentation en eau jusqu'à l'instant auquel le capteur d'eau (87) détecte l'eau.

4. Système de pile à combustible selon l'une quelconque des revendications 1 à 3,
dans lequel l'unité de commande (100) corrige des caractéristiques qui indiquent une corrélation entre la quantité physique concernant la sortie de la source de transport d'eau (8A) et le débit d'eau de reformage fournie au passage d'alimentation en eau (8), lorsque la quantité physique se trouve en dehors de la plage prescrite ou lorsque le traitement de détermination d'anomalie d'alimentation en eau est achevé.

5. Système de pile à combustible selon l'une quelconque des revendications 1 à 4,
dans lequel une quantité physique seuil supérieure à une limite supérieure de la plage prescrite est définie, et
dans lequel dans le cas où le capteur d'eau (87) ne détecte pas l'eau dans la condition selon laquelle l'opération d'alimentation en eau est exécutée, lorsque la quantité physique mesurée depuis l'instant de début de l'opération d'alimentation en eau devient supérieure à la quantité physique seuil, l'unité de commande (100) arrête la rotation positive de la source de transport d'eau (8A) effectuant l'opération d'alimentation en eau, détermine que l'alimentation en eau de l'unité d'évaporation (2) est anormale, et élimine la suralimentation de l'unité d'évaporation (2) en eau de reformage.
